# EUROPÄISCHE PATENTSCHRIFT

(11) **EP 2 821 262 B1**
(45) Veröffentlichungstag und Bekanntmachung des Hinweises auf die Patenterteilung: **18.04.2018**
(21) Anmeldenummer: 14173772.6
(22) Anmeldetag: 24.06.2014
(51) Int. Cl.: B60D 1/36, B60D 1/64, B60T 7/22, B60T 8/17

(54) **Elektrisch/Elektronisch-Pneumatisches Schnittstellenmodul**
Electric/Electronic-Pneumatic-Interface Module
Electrique/Electronique-Pneumatique-Module d'interface

(30) Priorität: 01.07.2013 DE 102013106875
(43) Veröffentlichungstag der Anmeldung: 07.01.2015
(73) Patentinhaber: Haldex Brake Products Aktiebolag, 261 24 Landskrona (SE)
(72) Erfinder: Maltry, Helmut, 69226 Nussloch (DE); Genthner, Horst, 67069 Ludwigshafen (DE)
(74) Vertreter: REHBERG HÜPPE + PARTNER

(56) Entgegenhaltungen:
- WO-A2-2011/100198
- US-A1- 2010 044 998
- US-A1- 2012 191 285

## Beschreibung

### TECHNISCHES GEBIET DER ERFINDUNG

Die Erfindung betrifft ein EPI-Modul. Unter einem EPI-Modul wird eine Kopplungs-Schnittstelle zwischen einem Zug- oder Nutzfahrzeug und einem Anhänger oder zwischen zwei Anhängern verstanden, welche gemäß dem englischen Sprachgebrauch als electrical/electronic-pneumatic-interface module bezeichnet wird und eine elektrische sowie eine pneumatische Kopplung sowie eine mechanische Kopplung oder Steckverbindung ermöglicht.

### STAND DER TECHNIK

Bei herkömmlichen Nutzfahrzeugen erfolgt eine Kupplung des Anhängers mit dem Zugfahrzeug über eine mechanische Kupplung, welche mit einem Königszapfen, einer Anhängerdeichsel oder einer beliebigen anderweitigen Kupplungseinrichtung erfolgen kann. Besitzt der Anhänger eine Druckluftbremsanlage, ist zumindest für Anhänger mit einer Höchstgeschwindigkeit von mehr als 25 km/h eine pneumatische Schnittstelle vorzusehen mit einem Kupplungskopf Vorrat, über welchen von dem Zugfahrzeug ein Vorrats- oder Versorgungsdruck an den Anhänger übertragbar ist, sowie einem Kupplungskopf Bremse, über welchen von dem Zugfahrzeug ein Bremssteuerdruck an den Anhänger übermittelt wird. Der Bremssteuerdruck wird in Abhängigkeit einer Betätigung eines Bremspedals durch den Fahrer des Zugfahrzeugs erzeugt und in dem Anhänger als Bremssteuerdruck genutzt, um für den Anhänger eine Anhängerbremskraft zu erzeugen, welche mit der Abbremsung des Zugfahrzeugs und der Betätigung des Bremspedals durch den Fahrer korreliert. Darüber hinaus besitzt in vielen Fällen die Schnittstelle auch eine elektrische Kupplung, bei welcher es sich um einen Einfach- oder Vielfachstecker handelt. Vorzugsweise findet eine elektrische Kupplung in Form einer Steckkupplung nach ISO 7638 Einsatz. Eine derartige Steckkupplung besitzt sieben Pins, nämlich einen Pin 1 für die positive Spannung eines Elektroventils, einen Pin 2 für die positive Spannung für Elektronik, einen Pin 3 für die negative Spannung für die Elektronik, einen Pin 4 für die negative Spannung des Elektroventils, einen Pin 5 für das Signal einer Warneinrichtung, einen Pin 6 für eine Kommunikationsverbindung für CAN_High sowie einen Pin 7 für eine CAN_Low, vgl. ISO 11992-1 und ISO 11992-2. Die Pins der Steckkupplung nach ISO 7368 sind bestimmt zur Übertragung elektrischer Leistung und zur Übertragung von Informationen, welche ausschließlich bestimmt sind für die Bremsfunktionen (einschließlich einer ABS- oder EBS-Regelung und Fahrwerksfunktionen, Lenkfunktionen, die Räder und die Aufhängung betreffende Funktionen, was näher in ISO 11992-2: 2003 mit Änderungsstand 1: 2007 spezifiziert ist). Hierbei besitzen die Bremsfunktionen Priorität, so dass diese sowohl in einem normalen Betriebsmodus als auch einem Notfall-Betriebsmodus aufrechterhalten werden sollen. Die Übertragung der Informationen für die Bremsfunktionen soll nicht verzögert werden durch die Übertragung anderweitiger Informationen. Zusammenfassend ist festzustellen, dass herkömmliche Anhänger zusätzlich zu der mechanischen Kupplung für das Zugfahrzeug üblicherweise mit einer Schnittstelle mit zwei separaten pneumatischen Baueinheiten, nämlich einem Kupplungskopf Bremse sowie einem Kupplungskopf Vorrat, oder mit drei Baueinheiten mit der zusätzlichen elektrischen Steckkupplung ausgestattet sind.

Neuerdings ist eine weitere Schnittstelle entwickelt worden, bei welcher in einer einzigen Kupplungseinheit sowohl ein Vorratsdruckanschluss als auch ein Bremssteuerdruckanschluss als auch eine elektrische Kupplung vorhanden sind. Mittels dieser weiteren Schnittstelle mit Kupplungseinheit kann mit oder nach mechanischer Kupplung des Anhängers mit dem Zugfahrzeug in einem einzigen Arbeitsschritt durch Ankupplung der Kupplungseinheit sowohl die pneumatische Verbindung über den Vorratsdruckanschluss und den Bremssteuerdruckanschluss als auch die elektrische Kupplung erfolgen. Eine derartige Schnittstelle mit Kupplungseinheit wird im englischen Sprachgebrauch auch als electrical/electronic-pneumatic-interfacemodul (EPI-Modul) bezeichnet. Derartige EPI-Module können beispielsweise neben dem Vorratsdruckanschluss und dem Bremssteuerdruckanschluss dreißig elektrische Anschlüsse oder Anschlüsse besitzen, wobei sieben elektrische Anschlüsse den Pins der Steckkupplung nach ISO 7638 entsprechen können. Einundzwanzig weitere elektrische Anschlüsse sind bestimmt für eine elektrische Verbindung für weitere Zwecke, wobei hier zwei zusätzliche elektrische Anschlüsse für einen CAN-Bus enthalten sein können. Zwei zusätzliche elektrische Anschlüsse werden für zukünftige Anwendungen vorgehalten. Derartige EPI-Module sind insbesondere bestimmt für den Einsatz in Zügen mit einem Anhänger und einem Zugfahrzeug, in welchen ein automatisches Kupplungssystem und/oder ein automatisches Entkupplungssystem Einsatz findet. Bei diesem soll sowohl die mechanische Kupplung als auch die elektrische und/oder pneumatische Kupplung zwischen Anhänger und Zugfahrzeug nicht unmittelbar manuell von dem Fahrer herbeigeführt werden, sondern automatisiert herbeigeführt werden. Dies erfolgt für viele Ausführungsformen für den automatischen Kupplungsvorgang bewegungsgesteuert durch die rückwärtige Annäherung des Zugfahrzeugs an den Anhänger. Diese Systeme werden im englischen Sprachgebrauch auch als "Fully Automated Coupling Systems", kurz FACS, bezeichnet. Durch den Einsatz automatischer Kupplungseinrichtungen kann es zu einer Erhöhung der Sicherheit, Beschleunigung des Kupplungsvorgangs und Erhöhung des Komforts kommen. Im Idealfall kann das Kuppeln und Entkuppeln zwischen Anhänger und Zugfahrzeug erfolgen, ohne dass der Fahrer die Kabine des Zugfahrzeugs zwingend verlassen muss.

Die nicht vorveröffentlichte Patentanmeldung mit der Anmelde-Nr. EP 12 176 976.4 offenbart die Ausstattung eines Anhängers mit einer ersten und einer zweiten Schnittstelle. Die erste Schnittstelle ist herkömmlich mit einem Kupplungskopf Vorrat, einem Kupplungskopf Bremse sowie einer Steckkupplung nach ISO 7638 ausgebildet, während die zweite Schnittstelle als EPI-Modul ausgebildet ist. Durch die beiden Schnittstellen wird ermöglicht, dass der Anhänger wahlweise mit einem Zugfahrzeug herkömmlicher Bauweise oder einem neueren Zugfahrzeug mit EPI-Modul koppelbar ist. Die pneumatischen Ausgangsleitungen der beiden Schnittstellen des Anhängers werden über Wechselventile jeweils mit einer einzigen Bremssteuerleitung und einer einzigen Vorratsleitung verbunden, so dass die Anhängerbremsanlage entsprechend den bekannten Anhängerbremsanlagen, welche über eine Vorratsleitung mit Druckluft versorgt werden und über die Bremssteuerleitung gesteuert werden, ausgebildet sein kann. Die elektrischen Signale der beiden Schnittstellen können über ein Y-Gate zu einer zentralen elektrischen Leitung zusammengeführt sein oder einer gemeinsamen Steuereinheit zugeführt sein. Die Steuereinheit kann hierbei mit geeigneter Steuerlogik ausgebildet sein, um eine Herstellung der pneumatischen, elektrischen und/oder mechanischen Kopplung zwischen Anhänger und Nutzfahrzeug zu erkennen. Mit Erkennung einer derartigen Kopplung zwischen Anhänger und Zugfahrzeug überführt die Steuereinheit automatisch ein Parkventil in eine Lösestellung, was beispielsweise durch Betätigung eines elektromagnetischen Aktuators, eines Stellantriebs, eines elektromagnetischen Ventils zur Erzeugung eines Drucks zur Überführung des Parkventils in die Lösestellung durch eine pneumatische Kraft u. ä. erfolgen kann, vgl. auch DE 10 2008 060 912 A1. Ebenfalls Einsatz finden kann ein pneumatischer, elektrischer und/oder mechanischer Kopplungssensor. Die erfolgte Kopplung kann auch dadurch erkannt werden, dass das Anliegen des Vorratsdrucks an mindestens einer Schnittstelle über einen Drucksensor erfasst wird, dessen Ausgangssignal der Steuereinheit zugeführt wird. Ebenfalls möglich ist die Erfassung eines über die Schnittstelle übertragenen Bremssteuerdrucks als Indiz für die erfolgte Kopplung, wobei dieser Bremssteuerdruck ausgelöst wird durch eine Bremsbetätigung durch den Fahrer. Auch möglich ist, dass eine erfolgte Kopplung zwischen Zugfahrzeug und Anhänger über die Herstellung einer elektrischen Verbindung über die Schnittstellen detektiert wird. Das automatische Überführen des Parkventils in die Lösestellung kann zusätzlich zu der erkannten Kopplung auch von weiteren Betriebsparametern oder einer Plausibilitätsprüfung abhängen. Beispielsweise kann das Überführen des Parkventils in die Lösestellung davon abhängig gemacht werden, dass erkannt wird, dass sich der Fahrer in der Fahrerkabine des Zugfahrzeugs befindet, eine Zündung aktiviert ist, der Anhänger auf einer nicht geneigten Fahrbahn steht, der Druck in einem Vorratsbehälter des Anhängers einen Schwellwert überschritten hat und/oder eine vorbestimmte Zeitspanne nach dem Erkennen der erfolgten Kopplung zwischen Zugfahrzeug und Anhänger verstrichen ist. Die Steuereinheit kann ausgangseitige Signalleitungen besitzen, über welche eine Ansteuerung von elektropneumatischen Bauelementen der Anhängerbremsanlage oder die Steuerung anderweitiger Funktionen möglich ist. Bauelemente der Anhängerbremsanlage wie das EPI-Modul, die Wechselventile und die Steuereinheit können als singuläre Bauelemente ausgebildet sein oder teilweise oder sämtlich zu einer Baueinheit oder Baueinheiten zusammengefasst sein. Die Steuereinheit kann auch in eine weiteren Zwecken dienende Steuereinheit, insbesondere eine EBS-Steuereinheit integriert sein.

DE 10 2008 014 285 A1 offenbart ein EPI-Modul für den Einsatz in einem FACS, wobei hier mechanische Führungselemente des EPI-Moduls radial elastisch ausgebildet sind. Auch DE 10 2008 014 573 A1 betrifft ein EPI-Modul für ein FACS, wobei sich diese Patentanmeldung mit der Überwachung der Verbindungsherstellung bzw. Herstellung der Kontaktierung der EPI-Module beschäftigt.

DE 10 2006 012 800 A1 beschreibt eine Steckerkonsole für eine elektrische und pneumatische Kupplung eines Zugfahrzeugs und eines Anhängers, die nach erfolgter mechanischer Kupplung automatisch aus dem Bereich zwischen Zugfahrzeug und Anhänger lateral ausgefahren wird, so dass die elektrische und pneumatische Kupplung vereinfacht manuell vorgenommen werden kann.

US 2011/0037241 A1 beschreibt ein EPI-Modul mit einer integrierten Positionserfassungseinrichtung. Hierbei ist ein EPI-Modul an einem Zugfahrzeug eines Sattelzugs montiert, während ein Gegen-EPI-Modul fest an einem Auflieger des Sattelzugs montiert ist und sich dabei in größerer Höhe befindet als das EPI-Modul. Das EPI-Modul ist sowohl in vertikaler Richtung verfahrbar als auch auf einem Schlitten befestigt, der in einer horizontalen Ebene auf Schienen entlang eines Bogens verfahren werden kann. Nach erfolgter mechanischer Kupplung mittels einer Sattelkupplung können Zugfahrzeug und Auflieger gegeneinander einen beliebigen Winkel annehmen. Der Bogen, dem die Schienen folgen, ist ein Kreisbogen mit seinem Mittelpunkt am Punkt der mechanischen Kupplung und daher so vorgesehen, dass der Schlitten an jede Position verfahren werden kann, die der des Gegen-EPI-Moduls im gekoppelten Zustand für unterscheidliche Winkel entspricht. Die Positionserfassungseinrichtung löst ein signal aus, wann sich das mit dem Schlitten verfahrene EPI-Modul direkt unterhalb des Gegen-EPI-Moduls befindet. Ist das EPI-Modul direkt unterhalb des Gegen-EPI-Moduls verfahren worden, wird das EPI-Modul angehoben, automatisch mit dem Gegen-EPI-Modul gekoppelt und anschließend von dem Schlitten entkoppelt, der in eine Ruheposition zurückkehrt.

WO 2013/088210 beschreibt ein Datenübertragungsmodul, bei dem nach erfolgter Kopplung zwischen Zugfahrzeug und Anhänger ein Identifizierungscode ausgetauscht wird, so dass von diesem Zeitpunkt an eine Datenübertragung nur zwischen den gegenwärtig gekoppelten Komponenten Zugfahrzeug und Anhänger drahtlos erfolgen kann.

DE 10 2010 004 920 A1 beschreibt eine Kopplungshilfe für einen PKW, bei der mittels Sensoren oder Kameras am Heck des PKWs die relative Position des Hecks des PKWs gegenüber dem ungekoppelten Anhänger überwacht wird. Der PKW wird für eine Rückwärtsfahrt in Richtung auf den Anhänger automatisch gesteuert und/oder eine Kupplung des PKW in Bezug auf das Heck des PKWs bewegt, so dass eine mechanische Kupplung automatisch stattfindet.

DE 10 2010 008 324 A1 beschreibt eine Rangierhilfe für eine Rückwärtsfahrt eines PKWs mit Anhänger, bei der ein Mobilgerät wie ein Mobiltelefon so angebracht wird, dass der Anhänger mit der Kamera des Mobilgeräts überwacht werden kann.

US 2011/0037241 A1 beschreibt ein EPI-Modul mit einer integrierten Positionserfassungseinrichtung. Hierbei ist ein EPI-Modul an einem Zugfahrzeug eines Sattelzugs montiert, während ein Gegen-EPI-Modul fest an einem Auflieger des Sattelzugs montiert ist und sich dabei in größerer Höhe befindet als das EPI-Modul. Das EPI-Modul ist sowohl in vertikaler Richtung verfahrbar als auch auf einem Schlitten befestigt, der in einer horizontalen Ebene auf Schienen entlang eines Bogens verfahren werden kann. Nach erfolgter mechanischer Kupplung mittels einer Sattelkupplung können Zugfahrzeug und Auflieger gegeneinander einen beliebigen Winkel annehmen. Der Bogen, dem die Schienen folgen, ist ein Kreisbogen mit seinem Mittelpunkt am Punkt der mechanischen Kupplung und daher so vorgesehen, dass der Schlitten an jede Position verfahren werden kann, die der des Gegen-EPI-Moduls im gekoppelten Zustand für unterschiedliche Winkel entspricht. Die Positionserfassungseinrichtung löst ein Signal aus, wann sich das mit dem Schlitten verfahrene EPI-Modul direkt unterhalb des Gegen-EPI-Moduls befindet. Ist das EPI-Modul direkt unterhalb des Gegen-EPI-Moduls verfahren worden, wird das EPI-Modul angehoben, automatisch mit dem Gegen-EPI-Modul gekoppelt und anschließend von dem Schlitten entkoppelt, der in eine Ruheposition zurückkehrt.

WO 2013/088210 beschreibt ein Datenübertragungsmodul, bei dem nach erfolgter Kopplung zwischen Zugfahrzeug und Anhänger ein Identifizierungscode ausgetauscht wird, so dass von diesem Zeitpunkt an eine Datenübertragung nur zwischen den gegenwärtig gekoppelten Komponenten Zugfahrzeug und Anhänger drahtlos erfolgen kann.

Gemäß WO 2011/100198 A2 soll ein Fahrzeugzug aus mehreren PKW mit elektrischen Antrieben gebildet werden. Zu diesem Zweck werden die PKW jeweils über eine Deichsel miteinander gekoppelt. Die ordnungsgemäße Kopplung wird über geeignete Sensorsysteme geprüft. Die Deichsel besitzt darüber hinaus eine elektronische Schnittstelle, über welche die jeweiligen Bremsen, Lenkeinrichtungen und Antriebe der einzelnen PKW hinsichtlich einer gemeinsamen Bewegung als Fahrzeugzug koordiniert werden. Über die elektrische Schnittstelle ist auch ein Leistungsaustausch zwischen den PKW möglich. Über hydraulische Stellzylinder kann eine Deichselstange eines PKW ein- und ausgefahren und horizontal sowie nach oben und unten bewegt werden. Für einen Kupplungsvorgang zwischen zwei PKW wird die Deichselstange eines PKW in eine Deichselaufnahme des anderen PKW eingeführt. Mit einer Verdrehung der Deichselstange um ihre Längsachse erfolgt eine Verriegelung der Deichselstange in der Deichselaufnahme. Die elektrische Schnittstelle wird von einer stirnseitigen Kontaktfläche der Deichselstange ausgebildet, welche in gekoppeltem Zustand zur Anlage an einer Kontaktfläche der Deichselaufnahme des anderen PKW kommt. Da die Kupplung über die Deichsel nur für einen vorgegebenen Abstand erfolgen kann, erfolgt die Erfassung des Abstands über einen Sensor, welcher auf der Vorderseite oder Rückseite eines PKW angeordnet sein kann. Bei diesem Sensor handelt es sich um einen Ultraschallsensor, eine optische Kamera oder einen Laser. Auf Grundlage des Signals des Sensors können dann die hydraulischen Aktuatoren für die Verlängerung und Bewegung der Deichselstange so beaufschlagt werden, dass die Deichselstange mit der Deichselaufnahme gekoppelt werden kann.

Auch US 2010/0044998 A1 offenbart eine mechanische Kupplung von zwei unabhängig antreibbaren, abbremsbaren und lenkbaren Fahrzeugen über eine teleskopierbare Deichselstange eines Fahrzeugs, welche Aufnahme findet in einer Deichselaufnahme des anderen Fahrzeugs.

DE 10 2010 004 920 A1 beschreibt eine Kopplungshilfe für einen PKW, bei der mittels Sensoren oder Kameras am Heck des PKWs die relative Position des Hecks des PKWs gegenüber dem ungekoppelten Anhänger überwacht wird. Der PKW wird für eine Rückwärtsfahrt in Richtung auf den Anhänger automatisch gesteuert und/oder eine Kupplung des PKW in Bezug auf das Heck des PKWs bewegt, so dass eine mechanische Kupplung automatisch stattfindet.

Ein ähnliches System zur Unterstützung eines Kupplungsvorgangs eines kugelförmigen Kupplungszapfens eines Zugfahrzeugs mit einer Kupplungsglocke eines Anhängers, bei welchem mittels Sensoren eine relative Position zwischen Zugfahrzeug und Anhänger überwacht wird, ist aus US 2012/0191285 A1 bekannt.

DE 10 2010 008 324 A1 beschreibt eine Rangierhilfe für eine Rückwärtsfahrt eines PKWs mit Anhänger, bei der ein Mobilgerät wie ein Mobiltelefon so angebracht wird, dass der Anhänger mit der Kamera des Mobilgeräts überwacht werden kann.

### AUFGABE DER ERFINDUNG

Der vorliegenden Erfindung liegt die Aufgabe zugrunde, den Fahrer bei der Herstellung der Verbindung zwischen Zugfahrzeug und Anhänger (weiter) zu unterstützen.

### LÖSUNG

Die Aufgabe der Erfindung wird erfindungsgemäß mit den Merkmalen des unabhängigen Patentanspruchs gelöst. Weitere bevorzugte erfindungsgemäße Ausgestaltungen sind den abhängigen Patentansprüchen zu entnehmen.

### BESCHREIBUNG DER ERFINDUNG

Das erfindungsgemäße EPI-Modul kann Bestandteil eines Zugfahrzeugs oder eines Anhängers sein. Des Weiteren kann das EPI-Modul für die Kopplung eines Zugfahrzeugs mit einem Anhänger oder für die Kopplung von zwei Anhängern eingesetzt sein. Aus Gründen der Vereinfachung wird im Folgenden (ohne dass hierdurch eine Beschränkung der Erfindung auf diesen Einsatzfall erfolgen soll) vorrangig der Einsatz des EPI-Moduls für einen Anhänger beschrieben, welcher mit einem Gegen-EPI-Modul eines Zugfahrzeugs gekoppelt werden soll.

Der vorliegenden Erfindung liegt die Erkenntnis zugrunde, dass für einen teil- oder vollautomatischen Kupplungsvorgang zwischen einem Zugfahrzeug und einem Anhänger (oder zwischen zwei Anhängern) Informationen hinsichtlich der relativen Position zwischen Zugfahrzeug und Anhänger von Interesse sind. Hierbei kann die relative Position ein relativer Längsabstand von Zugfahrzeug und Anhänger, ein seitlicher Versatz zwischen Zugfahrzeug und Anhänger, ein Höhenversatz und/oder ein relativer Winkel zwischen Zugfahrzeug und Anhänger sein. Der Abstand in Längsrichtung kann bspw. zur Anpassung der rückwärtigen Annäherungsgeschwindigkeit des Zugfahrzeugs an den Anhänger und eine rechtzeitige automatische Abbremsung erforderlich sein. Der seitliche Versatz ist innerhalb enger vorbestimmter Grenzen zu halten, damit die voll- oder teilautomatische Herstellung sowohl der mechanischen Kupplung, beispielsweise über einen Königszapfen, als auch der Kupplung über das EPI-Modul überhaupt möglich ist. Entsprechendes gilt für einen Höhenversatz. Für einen relativen Winkel zwischen Zugfahrzeug und Anhänger, welcher sich beispielsweise infolge unterschiedlicher Einfederungen der Fahrzeugseiten von Zugfahrzeug und Anhänger und/oder nicht ausgerichtete Längsachsen des Zugfahrzeugs und des Anhängers ergibt, kann ebenfalls eine Kopplung von Zugfahrzeug und Anhänger erschwert oder unmöglich sein. Eine Überwachung der relativen Position während der Rückwärtsfahrt des Zugfahrzeugs ist ohne die erfindungsgemäßen Maßnahmen unter Umständen nicht oder nur unter erschwerten Bedingungen möglich, insbesondere da der Anhänger aus der Fahrerkabine des Zugfahrzeugs (auch bei Verwendung von Spiegeln) teilweise verdeckt ist.

Die Erfindung schlägt vor, eine Positionserfassungseinrichtung einzusetzen, mittels welcher während einer Rückwärtsfahrt des Zugfahrzeugs die relative Position zwischen Zugfahrzeug und Anhänger, insbesondere der Abstand in Längsrichtung, der seitliche Versatz, ein Höhenversatz und/oder ein Winkel, ermittelt werden kann. Das Ergebnis der Positionserfassungseinrichtung kann dem Fahrer während des voll- oder teilautomatisierten Kupplungsvorgangs denselben vereinfachen. Möglich ist auch, dass das Ergebnis der Positionserfassungseinrichtung von automatischen Unterstützungssystemen bei der voll- oder teilautomatischen Kupplung zwischen Zugfahrzeug und Anhänger verwendet wird. Bei der Positionserfassungseinrichtung kann es sich um eine mechanische, auf einem mechanischen Kontakt basierende Positionserfassungseinrichtung handeln. Vorzugsweise arbeitet die Positionserfassungseinrichtung aber berührungslos. Die Positionserfassungseinrichtung kann hierbei auf einem beliebigen Messprinzip basieren, beispielsweise auf Grundlage einer CCD-Kamera, eines Ultraschall-Sensors, eines Radar-Sensors, einer Verarbeitung eines Signals, welches von dem Anhänger (oder dem Zugfahrzeug) gesendet worden ist, nach Empfang dieses Signals durch das Zugfahrzeug (oder den Anhänger) u. ä. arbeiten.

Erfindungsgemäß ist die Positionserfassungseinrichtung nicht an beliebiger Stelle des Zugfahrzeugs oder Anhängers angeordnet. Vielmehr schlägt die Erfindung vor, dass die Positionserfassungseinrichtung in das EPI-Modul integriert ist, womit sich ein multifunktionales EPI-Modul ergibt, welches nicht lediglich der Herstellung der elektrischen/elektronischen sowie pneumatischen Leitungsverbindungen dient, sondern gleichzeitig der Positionserfassung. Im Rahmen der Erfindung wird unter einer "integrierten Positionserfassungseinrichtung" des EPI-Moduls eine Positionserfassungseinrichtung verstanden, welche baulich mit dem EPI-Modul vereinigt ist, was durch Integration der Positionserfassungseinrichtung in ein Gehäuse des EPI-Moduls erfolgen kann oder durch Anflanschen eines die Positionserfassungseinrichtung bildenden Teilmoduls an ein anderes Teilmodul zur Bildung des EPI-Moduls.

Die Integration der Positionserfassungseinrichtung in das EPI-Modul hat (zusätzlich zu der hierdurch multifunktionalen Ausbildung des EPI-Moduls) die folgenden optionalen weiteren Vorteile:
- Die Stirnseiten der Zugfahrzeuge und Anhänger, welche während eines Kupplungsvorgangs einander zugewandt sind, sind für unterschiedliche Fahrzeuge unter Umständen unterschiedlich ausgebildet. Ist abweichend zur vorliegenden Erfindung eine Positionserfassungseinrichtung eines Anhängers im Bereich der Stirnseite des Anhängers abseits des EPI-Moduls angeordnet, kann während eines Kupplungsvorgangs unter Umständen die Positionserfassungseinrichtung mit einem Bauelement im Bereich der zugewandten Stirnseite des Zugfahrzeugs kollidieren, womit schlimmstenfalls die Positionserfassungseinrichtung beschädigt wird. Durch Integration der Positionserfassungseinrichtung in das EPI-Modul befindet sich die Positionserfassungseinrichtung an einer vorbestimmten Stelle, welche korreliert mit einer vorbestimmten Stelle der Stirnseite des Zugfahrzeugs, nämlich dem Gegen-EPI-Modul des Zugfahrzeugs, womit das Risiko einer Kollision der Positionserfassungseinrichtung mit einem Bauelement der Stirnseite des Zugfahrzeugs zumindest reduziert ist.
- Vorzugsweise arbeitet die in das EPI-Modul integrierte Positionserfassungseinrichtung des Anhängers mit einem Gegen-EPI-Modul, insbesondere mit einer zugeordneten Gegen-Positionserfassungseinrichtung, des Zugfahrzeugs zusammen. Erfindungsgemäß kann somit die Anpassung der Positionserfassungseinrichtung und deren Messtätigkeit auf das EPI-Modul und das Gegen-EPI-Modul beschränkt werden, wodurch einerseits der Aufwand sinkt und andererseits definierte Positionserfassungsbedingungen bereitgestellt werden können.
- Besteht die Positionserfassungseinrichtung beispielsweise in einer CCD-Kamera, so würde die Anordnung der Positionserfassungseinrichtung (abweichend zur Erfindung) an beliebiger Stelle der Stirnseite des Anhängers bedeuten, dass das von der CCD-Kamera während der Annäherung des Zugfahrzeugs aufgenommene Bild je nach Ausgestaltung der Stirnseite des Zugfahrzeugs unterschiedlich ist. Das von der CCD-Kamera je nach Kupplungsfall variierende Bild bedarf einer komplexen Auswertung, um die Position trotz unterschiedlicher Gestaltung der Stirnseiten mit hinreichender Genauigkeit zu erfassen. Ist die Positionserfassungseinrichtung, insbesondere die CCD-Kamera, in das EPI-Modul integriert, so ist möglich, dass die Positionserfassungseinrichtung, bspw. die CCD-Kamera, zusammenwirkt mit dem Gegen-EPI-Modul, welches im einfachsten Fall standardisiert ist oder lediglich vorbestimmten unterschiedlichen Ausgestaltungen unterworfen sein kann. Somit liegen definierte Positionserfassungsbedingungen vor, welche auch eine Vereinfachung des Auswertealgorithmus zur Ermittlung der Position ermöglichen und Fehlerquellen reduzieren.
- Erfolgt eine Erfassung der relativen Position zwischen Zugfahrzeug und Anhänger durch Senden eines Signals von einem EPI-Modul und Empfangen dieses Signals durch ein Gegen-EPI-Modul, kann der Sender, welcher die Positionserfassungseinrichtung in dem EPI-Modul bildet, auf einfache Weise in das EPI-Modul integriert sein.
- Letztendlich hängt die Zuverlässigkeit der Kopplung des EPI-Moduls mit einem Gegen-EPI-Modul ab von der relativen Position des EPI-Moduls zu dem Gegen-EPI-Modul. Wird (abweichend zur vorliegenden Erfindung) eine Positionserfassungseinrichtung eingesetzt, welche abseits des EPI-Moduls angeordnet ist, wird auch eine relative Position von dieser erfasst, welche nicht der relativen Position des EPI-Moduls gegenüber dem Gegen-EPI-Modul entspricht. Somit ist für diese nicht erfindungsgemäße Ausgestaltung erst eine "Umrechnung" der relativen Position abseits des EPI-Moduls zu der relativen Position des EPI-Moduls und des Gegen-EPI-Moduls erforderlich, welche einen erhöhten Aufwand bedingt und unter Umständen die Erfassungsgenauigkeit beeinträchtigt.
- Möglich ist, dass ein Gehäuse des EPI-Moduls (neben der üblichen Funktion dieses Gehäuses in dem EPI-Modul) multifunktional ist, da dieses auch die Positionserfassungseinrichtung aufnimmt, schützt, abdichtet und abschirmt.
- Durch die erfindungsgemäße Ausgestaltung erübrigen sich zusätzliche Befestigungsstellen und zusätzlicher Bauraum für die Anordnung und Befestigung der Positionserfassungseinrichtung.

Möglich ist, dass die Positionserfassungseinrichtung über eine externe Leistungsversorgung gespeist ist. Gemäß einem weiteren Vorschlag der Erfindung ist in das EPI-Modul eine Speichereinrichtung integriert, welche einer elektrischen Leistungsversorgung der integrierten Positionserfassungseinrichtung dient. Über die integrierte Speichereinrichtung kann die integrierte Positionserfassungseinrichtung auch betrieben werden, wenn eine Kopplung eines EPI-Moduls des Anhängers mit einem Gegen-EPI-Modul des Zugfahrzeugs noch nicht erfolgt ist, so dass keine elektrische Leistungsversorgung über das Zugfahrzeug möglich ist. Somit kann die integrierte Positionserfassungseinrichtung bereits arbeiten, wenn das Zugfahrzeug noch von dem Anhänger beabstandet ist, um den Fahrer auch während dieser Phase des voll- oder teilautomatischen Kupplungsvorgangs zu unterstützen. Andererseits ist für den Betrieb der integrierten Positionserfassungseinrichtung nicht erforderlich, dass eine anderweitige Speichereinrichtung für eine elektrische Leistungsversorgung des Anhängers genutzt wird und zusätzliche elektrische Versorgungsleitungen von einer externen Speichereinrichtung zu dem EPI-Modul geführt werden müssen.

Durchaus möglich ist, dass die Speichereinrichtung über austauschbare Akkumulatoren oder Batterien verfügt, über welche die elektrische Leistungsversorgung der integrierten Positionserfassungseinrichtung erfolgt. In weiterer Ausgestaltung der Erfindung erfolgt die (Wieder-) Aufladung der Speichereinrichtung über einen elektrischen Anschluss des EPI-Moduls, über welchen elektrische Leistung zwischen dem Zugfahrzeug und dem Anhänger übertragen wird. Hierbei kann bei Kupplung des EPI-Moduls mit einem Gegen-EPI-Modul eine gesteuerte Wiederaufladung erfolgen, beispielsweise in Aufladezyklen nach vorbestimmten Betriebszeiten oder unter Überwachung des Ladezustands der Speichereinrichtung, was über eine geeignete Steuerlogik einer Steuereinheit erfolgen kann.

Ebenfalls möglich ist im Rahmen der vorliegenden Erfindung, dass die Speichereinrichtung über eine Solareinrichtung wieder aufladbar ist, wobei die Solareinrichtung ebenfalls Bestandteil des EPI-Moduls sein kann oder extern von diesem angeordnet sein kann.

Sofern gewünscht ist, dass ein Positionssignal der integrierten Positionserfassungseinrichtung an einem anderen Ort, beispielsweise im Zugfahrzeug oder der Fahrerkabine des Zugfahrzeugs zur Verfügung stehen soll, schlägt die Erfindung vor, dass das EPI-Modul mit einer drahtlosen Sendeeinrichtung ausgestattet ist, mittels welcher drahtlos das Positionssignal gesendet werden kann. Diese drahtlose Sendeeinrichtung kann bereits drahtlos das Positionssignal zu dem Zugfahrzeug übertragen, auch wenn noch nicht die elektrische Kopplung zwischen EPI-Modul und Gegen-EPI-Modul erfolgt ist, so dass auch in dieser Phase des voll- oder teilautomatischen Kupplungsvorgangs das Positionssignal vorliegt und verarbeitet oder berücksichtigt werden kann.

Der Integrationsgrad des EPI-Moduls kann erhöht werden, indem in das EPI-Modul auch eine Steuereinheit integriert ist. Diese Steuereinheit ist insbesondere mit Steuerlogik ausgestattet, um die vorgenannten Funktionen, insbesondere
- die Wiederaufladung der Speichereinrichtung und/oder die Aktivierung und Deaktivierung der elektrischen Leistungsversorgung der integrierten Positionserfassungseinrichtung zu steuern oder regeln und/oder
- aus Signalen der Positionserfassungseinrichtung eine relative Längsposition, einen seitlichen Versatz, einen Höhenversatz oder einen relativen Winkel zu ermitteln.

Für eine besondere Ausgestaltung der Erfindung ist die Steuereinheit stoßgedämpft und/oder stoßgefedert in einem Gehäuse des EPI-Moduls befestigt. Diese Ausgestaltung der Erfindung beruht auf der Erkenntnis, dass es während des voll- oder teilautomatischen Kupplungsvorgangs und der Herstellung des Kontakts zwischen EPI-Modul und Gegen-EPI-Modul zu stoßartigen Beanspruchungen kommen kann, welche eine empfindliche Steuereinheit beschädigen können. Derartige Schäden können durch die stoßgedämpfte und/oder stoßgefederte Befestigung der Steuereinheit an dem Gehäuse des EPI-Moduls vermieden werden.

In weiterer Ausgestaltung der Erfindung kann die Steuereinheit zu einem weiteren Zweck genutzt werden, indem diese mit Steuerlogik ausgestattet ist, welche ein Steuersignal für eine Steuerung von Magnetventilen einer elektropneumatisch gesteuerten Bremsanlage und/oder einer elektropneumatisch gesteuerten Luftfederanlage erzeugt. Hierbei kann das Steuersignal der Steuereinheit unmittelbar zur Steuerung von Magnetventilen genutzt werden oder zur Steuerung von elektrisch gesteuerten Vorsteuerventilen, wobei die Magnetventile oder Vorsteuerventile außerhalb des EPI-Moduls oder innerhalb desselben angeordnet sein können. Durchaus möglich ist auch, dass die in das EPI-Modul integrierte Steuereinheit mit anderen Steuereinheiten des Anhängers, beispielsweise einer EBS-Steuereinheit, zusammenwirkt, was auch über einen Datenbusanschluss des EPI-Moduls erfolgen kann.

In weiterer Ausgestaltung der Erfindung ist die Steuereinheit mit Steuerlogik ausgestattet, welche in Abhängigkeit von der Positionserfassungseinrichtung die Bremsanlage aktiviert oder deaktiviert. Um lediglich ein Beispiel zu nennen, kann mit Erkennen durch die Positionserfassungseinrichtung, dass die ordnungsgemäße Kupplung des EPI-Moduls mit einem Gegen-EPI-Modul erfolgt ist, ein automatisches Deaktivieren einer Parkbremse erfolgen. Andererseits kann für den Fall, dass erkannt wird, dass eine Annäherung des Zugfahrzeugs an den Anhänger für einen Kupplungsvorgang erfolgt, automatisiert die Bremsanlage des Anhängers aktiviert werden, um zu vermeiden, dass mit dem Stoß am Ende des automatischen Kupplungsvorgangs der Anhänger ins Rollen gerät.

Die Erfindung schlägt auch vor, dass in dem EPI-Modul mindestens ein pneumatisches Ventil vorhanden ist, bei welchem es sich beispielsweise um mindestens eines der Wechselventile gemäß der europäischen Patentanmeldung mit der Anmeldungs-Nr. EP 12 176 976.4, ein pneumatisch vorsteuerndes oder pneumatisch gesteuertes Ventil, ein direkt elektrisch gesteuertes Magnetventil o. ä. handeln kann. Ebenfalls möglich ist, dass das pneumatische Ventil mit einem in das EPI-Modul integrierten Löseventil, Parkventil und/oder Anhängerbremsventil gebildet ist. Ebenfalls möglich ist, dass eine EBS-Steuereinheit mit den in dieser üblicherweise eingesetzten Ventilen in das EPI-Modul integriert ist.

In weiterer Ausgestaltung der Erfindung ist die Steuereinheit mit Steuerlogik ausgestattet, welche das Signal mindestens eines Drucksensors einer Luftfederungsanlage und/oder der Bremsanlage verarbeitet, welcher innerhalb oder außerhalb des EPI-Moduls angeordnet sein kann. Beispielsweise kann mit der Steuereinheit auf Grundlage von Drucksensoren detektiert werden, ob der Anhänger horizontal ausgerichtet ist, so dass eine Kupplung möglich ist. Über mindestens einen Drucksensor und Verarbeitung des Drucksignals durch die Steuereinheit kann auch ermittelt werden, ob eine Liftachse angesichts des Beladungszustands des Anhängers abgesenkt werden muss und/oder eine Niveauregelung erforderlich ist, was durch die in das EPI-Modul integrierte Steuereinheit erfolgen kann.

Für eine erfindungsgemäße Weiterbildung des EPI-Moduls ist die Steuereinheit mit Steuerlogik ausgestattet, welche das Signal eines Drucksensors verarbeitet, welcher einen über das EPI-Modul übertragenen Bremssteuerdruck oder Vorratsdruck verarbeitet. Erst mit Kupplung des EPI-Moduls mit einem Gegen-EPI-Modul liegt in dem EPI-Modul der von dem Zugfahrzeug bereitgestellte Vorratsdruck vor. Wird dieser Vorratsdruck durch den Drucksensor erfasst, kann auf dieser Grundlage über die Steuereinheit darauf geschlossen werden, dass die ordnungsgemäße Kupplung erfolgt ist. Hierbei kann der Drucksensor innerhalb oder außerhalb des EPI-Moduls angeordnet sein. Entsprechendes gilt für den Bremssteuerdruck, welcher in dem EPI-Modul nur dann vorliegt, wenn einerseits die ordnungsgemäße Kopplung des EPI-Moduls mit einem Gegen-EPI-Modul erfolgt ist und andererseits von dem Fahrer des Zugfahrzeugs, beispielsweise durch Betätigung des Bremspedals, oder von einem automatischen Bremssystem ein Bremssteuerdruck erzeugt worden ist.

Ebenfalls möglich ist im Rahmen der vorliegenden Erfindung, dass die Steuereinheit mit Steuerlogik ausgestattet ist, welche das Signal eines mechanischen Kontakt- oder Kopplungssensors verarbeitet, welcher Bestandteil des EPI-Moduls sein kann oder außerhalb desselben angeordnet sein kann.

In weiterer Ausgestaltung des erfindungsgemäßen EPI-Moduls ist die Steuereinheit mit Steuerlogik ausgestattet, welche mit einem FACS zusammenwirkt, was auf vielfältige Weisen erfolgen kann. Um ein einziges, nicht beschränkendes Beispiel zu nennen, können Maßnahmen des FACS wie insbesondere eine Bremsbetätigung durch die in das EPI-Modul integrierte Steuereinheit und eine entsprechende Datenverbindung zwischen dieser Steuereinheit und dem FACS ausgelöst werden, wenn die durch die Positionserfassungseinrichtung ermittelte relative Position eine Annäherung zwischen Zugfahrzeug und Anhänger indiziert, beispielsweise dadurch, dass der relative Längsabstand einen Schwellwert unterschreitet.

Ein weiterer Vorschlag der Erfindung widmet sich der Problematik, dass ohne ergänzende Sicherungsmaßnahmen ein Anhänger von einem beliebigen Zugfahrzeug mitgenommen und gestohlen werden kann. Wünschenswert hingegen ist, dass ein Anhänger nur von einem entsprechend autorisierten Zugfahrzeug mitgenommen werden kann. Erfindungsgemäß wird vorgeschlagen, dass das EPI-Modul über eine Identifikationseinrichtung verfügt, welche ein Identifikationssignal sendet und/oder empfängt. Sendet beispielsweise das Gegen-EPI-Modul des Zugfahrzeugs ein Identifikationssignal aus, kann dieses durch die Identifikationseinrichtung des EPI-Moduls des Anhängers empfangen werden. Wird das richtige Identifikationssignal empfangen, liegt eine Autorisierung vor. Beispielsweise kann das Identifikationssignal Zugfahrzeuge eines Spediteurs identifizieren und autorisieren, während andere Zugfahrzeuge kein Identifikationssignal senden oder ein falsches Identifikationssignal senden. Möglich ist im Rahmen der Erfindung, dass das Senden und/oder Empfangen über die Verbindung zwischen EPI-Modul und Gegen-EPI-Modul erfolgt, also leitungsgebunden. Vorzugsweise erfolgt das Senden und/oder Empfangen aber leitungs- und drahtlos, insbesondere über ein RF-Signal.

Möglich ist, dass das EPI-Modul mit einer Steuereinheit ausgestattet ist, welche über Steuerlogik verfügt, die ein von einer Identifikationseinrichtung empfangenes Identifikationssignal auswertet. Die Auswertung besteht hierbei insbesondere darin, ein autorisiertes Identifikationssignal von einem nicht autorisierten Identifikationssignal zu unterscheiden. Je nach Vorliegen oder Fehlen der Autorisation kann dann die Steuereinheit weitere Schritte ergreifen. Beispielsweise kann die Steuereinheit ein Steuersignal erzeugen, welches je nach vorliegender oder fehlender Autorisation das Lösen der Parkbremse ermöglicht oder nicht ermöglicht oder die Durchleitung des Vorratsdrucks und/oder des Bremssteuerdrucks zu weiteren Bauelementen ermöglicht oder nicht ermöglicht. Auch möglich ist, dass die Steuereinheit für Erkennen des Versuchs, dass das Ankuppeln eines Gegen-EPI-Moduls erfolgt, welches nicht autorisiert ist, ein Signal erzeugt, welches eine Alarm-, Warn- oder Signaleinrichtung aktiviert.

Im Rahmen der obigen Erläuterung wird vorzugsweise bei dem Anhänger von einem EPI-Modul gesprochen, während das Zugfahrzeug über ein Gegen-EPI-Modul verfügt. Der Rahmen der Erfindung umfasst aber auch, dass das beschriebene EPI-Modul dem Zugfahrzeug zugeordnet ist, während das Gegen-EPI-Modul dem Anhänger zugeordnet ist.

EPI-Modul und Gegen-EPI-Modul können in einer Ebene angeordnet sein, die parallel zu der Ebene der Fahrbahn des Zugfahrzeugs verläuft, und/oder mit einer Kopplungsbewegung in dieser Ebene miteinander gekoppelt werden. Möglich ist auch, dass eine relative Position von Zugfahrzeug und Anhänger, wie insbesondere der Abstand in Längsrichtung, der seitliche Versatz und/oder der Winkel, in der Ebene, die parallel zu der Ebene der Fahrbahn des Zugfahrzeugs verläuft, gemessen wird. Die Positionserfassung kann unabhängig von dem Vorhandensein eines Abstands zwischen Zugfahrzeug und Anhänger erfolgen. Die Erfassung der relativen Position kann vor einer mechanischen Kopplung von Zugfahrzeug und Anhänger erfolgen. Möglich ist des weiteren, dass eine berührungslose Positionserfassungseinrichtung Einsatz findet.

Das erfindungsgemäße EPI-Modul verwirklicht insbesondere eine Positionserfassungseinrichtung, die unabhängig und separat von mechanischen Koppelorganen wie einer Platte und einem Königsbolzen einer Sattelkupplung vorgesehen ist. Typischerweise ist ein erfindungsgemäßes EPI-Modul von solchen mechanischen Koppelorganen beabstandet. EPI-Modul und Gegen-EPI-Modul mit der Positionserfassungseinrichtung(en) sind ortsfest montiert, so dass sie während eines Kopplungsvorgangs ihre Lage nicht verändern, und können ohne bewegliche Teile realisiert werden, die während eines Kopplungsvorgangs in Bezug auf das Zugfahrzeug oder den Anhänger nennenswerten Lageveränderungen unterliegen würden. Möglich ist aber auch, dass das EPI-Modul während der Rückwärtsfahrt ortsfest angeordnet ist, während dieses (und unter Umständen auch das Gegen-EPI-Modul) bspw. zum Herstellen der Verbindung zwischen EPI-Modul und Gegen-EPI-Modul bewegt werden kann/können, vgl. DE 10 2006 012 800 A1.

Vorteilhafte Weiterbildungen der Erfindung ergeben sich aus den Patentansprüchen, der Beschreibung und den Zeichnungen. Die in der Beschreibungseinleitung genannten Vorteile von Merkmalen und von Kombinationen mehrerer Merkmale sind lediglich beispielhaft und können alternativ oder kumulativ zur Wirkung kommen, ohne dass die Vorteile zwingend von erfindungsgemäßen Ausführungsformen erzielt werden müssen. Ohne dass hierdurch der Gegenstand der beigefügten Patentansprüche verändert wird, gilt hinsichtlich des Offenbarungsgehalts der ursprünglichen Anmeldungsunterlagen und des Patents Folgendes: weitere Merkmale sind den Zeichnungen - insbesondere den dargestellten Geometrien und den relativen Abmessungen mehrerer Bauteile zueinander sowie deren relativer Anordnung und Wirkverbindung - zu entnehmen. Die Kombination von Merkmalen unterschiedlicher Ausführungsformen der Erfindung oder von Merkmalen unterschiedlicher Patentansprüche ist ebenfalls abweichend von den gewählten Rückbeziehungen der Patentansprüche möglich und wird hiermit angeregt. Dies betrifft auch solche Merkmale, die in separaten Zeichnungen dargestellt sind oder bei deren Beschreibung genannt werden. Diese Merkmale können auch mit Merkmalen unterschiedlicher Patentansprüche kombiniert werden. Ebenso können in den Patentansprüchen aufgeführte Merkmale für weitere Ausführungsformen der Erfindung entfallen.

Die in den Patentansprüchen und der Beschreibung genannten Merkmale sind bezüglich ihrer Anzahl so zu verstehen, dass genau diese Anzahl oder eine größere Anzahl als die genannte Anzahl vorhanden ist, ohne dass es einer expliziten Verwendung des Adverbs "mindestens" bedarf. Wenn also beispielsweise von einem Element die Rede ist, ist dies so zu verstehen, dass genau ein Element, zwei Elemente oder mehr Elemente vorhanden sind. Wenn hingegen nur die genaue Anzahl eines Merkmals angegeben werden soll, findet das Adjektiv "genau" vor dem jeweiligen Merkmal Verwendung. Diese Merkmale können durch andere Merkmale ergänzt werden oder die einzigen Merkmale sein, aus denen das jeweilige Erzeugnis besteht.

### KURZBESCHREIBUNG DER FIGUREN

Im Folgenden wird die Erfindung anhand in den Figuren dargestellter bevorzugter Ausführungsbeispiele weiter erläutert und beschrieben.
- **Fig. 1**: zeigt in räumlicher Darstellung ein EPI-Modul eines Anhängers mit einem Vorratsdruckanschluss, einem Bremssteuerdruckanschluss, elektrischen Anschlüssen und mechanischen Führungs- und Kupplungselementen. (Stand der Technik)
- **Fig. 2**: zeigt ein zu dem EPI-Modul gemäß Fig. 1 passendes Gegen-EPI-Modul eines Zugfahrzeugs in räumlicher Darstellung. (Stand der Technik)
- **Fig. 3**: zeigt grob schematisiert ein erfindungsgemäßes EPI-Modul während eines Kupplungsvorgangs mit einem Gegen-EPI-Modul.

### FIGURENBESCHREIBUNG

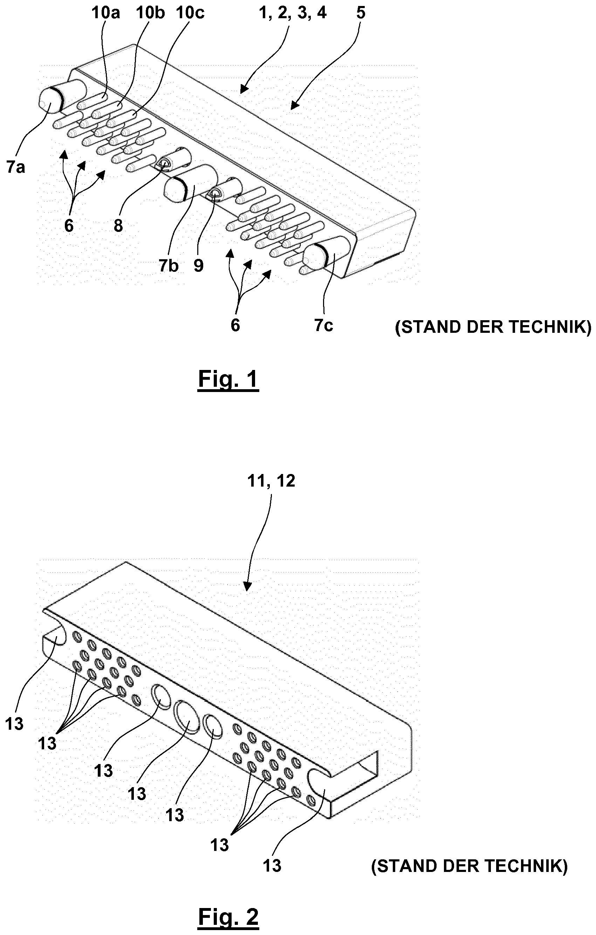

**Fig. 1** zeigt eine Schnittstelle 1, welche mit einer Kupplungseinheit 2 gebildet ist, welche eine singuläre Baueinheit 3 bildet. Hierbei handelt es sich um ein EPI-Modul 4. Das EPI-Modul 4 ist in der Art eines Steckers 5 ausgebildet mit parallel zu einander orientierten Steckelementen 6, welche sämtlich auf einer Seite des EPI-Moduls 4 angeordnet sind.

Bei dem EPI-Modul 4 sind drei Steckelemente 6 als mechanische Führungs- und Kupplungselemente 7a, 7b, 7c ausgebildet, wobei die Führungs- und Kupplungselemente 7a, 7c randseitig angeordnet sind, während das Führungs- und Kupplungselement 7b mittig angeordnet ist. Die Führungs- und Kupplungselemente 7 sind zylinderförmig ausgebildet mit einer halbkugelförmigen, kegelförmigen oder konvexen Stirnseite. Zwei weitere Steckelemente 6 sind als Vorratsdruckanschluss 8 und Bremssteuerdruckanschluss 9 ausgebildet, wobei für das dargestellte Ausführungsbeispiel der Vorratsdruckanschluss 8 und der Bremssteuerdruckanschluss 9 beidseits des Führungs- und Kupplungselements 7b und benachbart zu diesem angeordnet sind.

Weitere dreißig Steckelemente 6 sind als elektrische Pole oder elektrische Anschlüsse 10a, 10b, ... ausgebildet, wobei fünfzehn elektrische Anschlüsse 10 zwischen dem Führungs- und Kupplungselement 7a und dem Vorratsdruckanschluss 8 und fünfzehn weitere elektrische Anschlüsse 10 zwischen dem Bremssteuerdruckanschluss 9 und dem Führungs- und Kupplungselement 7c angeordnet sind.

Die folgende Tabelle zeigt eine beispielhafte Ausbildung und Belegung der elektrischen Anschlüsse 10:

| **Laufende Nr. Anschluss 10** | **Fläche in mm²** | **Norm** | **Funktion** |
|---|---|---|---|
| 10-1 | 4(6) | ISO 7638 Anschluss 1 | **ABS/EBS plus Elektroventil** |
| 10-2 | 1,5 | ISO 7638 Anschluss 2 | **ABS/EBS plus Elektronik** |
| 10-3 | 1,5 | ISO 7638 Anschluss 3 | **ABS/EBS minus Elektronik** |
| 10-4 | 4(6) | ISO 7638 Anschluss 4 | **ABS/EBS minus Elektronik** |
| 10-5 | 1,5 | ISO 7638 Anschluss 5 | **ABS/EBS Warneinrichtung** |
| 10-6 | 1,5 | ISO 7638 Anschluss 6 | **ABS/EBS CAN_High entsprechend ISO 11992-1 und 11992-2 für einen Datenaustausch der Bremssysteme und des Fahrwerks** |
| 10-7 | 1,5 | ISO 7638 Anschluss 7 | **ABS/EBS CAN_Low entsprechend ISO 11992-1 und 11992-2 für einen Datenaustausch der Bremssysteme und des Fahrwerks** |
| 10-8 | 2,5 | - | **Elektrischer Stützfuß 2** |
| 10-9 | 1,5 | - | **Zündung 24V** |
| 10-10 | 1,5 | ISO 12098 Anschluss 10 | **Sensierende Einrichtung mit gemeinsamer Rückführung** |
| 10-11 | 2,5 | - | **Elektrischer Stützfuß 1** |
| 10-12 | 1,5 | - | **Kamera 2** |
| 10-13 | 1,5 | ISO 12098 Anschluss 11 | **Start-Traktions-Steuersystem** |
| 10-14 | 1,5 | - | **erste Kamera** |
| 10-15 | 1,5 | - | **Frei** |
| 10-16 | 1,5 | ISO 12098 Anschluss 15 | **CAN_Low entsprechend ISO 11992-1 und 11992-3 für einen Datenaustausch mit anderen Einrichtungen als die Bremssysteme und das Fahrwerk** |
| 10-17 | 1,5 | ISO 12098 Anschluss 6 | **Rechte hintere Positionslichter, rechte Markierungslichter und rechte Beleuchtung einer Registrier-Platte oder Anzeigeplatte** |
| 10-18 | 6 | - | **Rückführung für Anschluss 26** |
| 10-19 | 1,5 | ISO 12098 Anschluss 14 | **CAN_High entsprechend ISO 11992-1 und 11992-3 für einen** |
| | | | **Datenaustausch mit anderen Einrichtungen als die Bremssysteme und das Fahrwerk** |
| 10-20 | 1,5 | ISO 12098 Anschluss 5 | **Linke hintere Positionslichter, linke Markierungslichter und linke Beleuchtung einer Registrier-Platte oder Anzeigeplatte** |
| 10-21 | 6 | ISO 12098 Anschluss 9 | **Permanente elektrische Leistungsversorgung für zusätzliche Geräte** |
| 10-22 | 1,5 | ISO 12098 Anschluss 3 | **Hinteres Nebellicht** |
| 10-23 | 2,5 | ISO 12098 Anschluss 13 | **Gemeinsame Rückführung für Anschlüsse 16 und 17** |
| 10-24 | 1,5 | ISO 12098 Anschluss 8 | **Rückwärtsfahrlicht** |
| 10-25 | 1,5 | ISO 12098 Anschluss 1 | **Blinker links** |
| 10-26 | 2,5 | ISO 12098 Anschluss 4 | **Gemeinsame Rückführung für Anschlüsse 18-20, 22-24,27-29** |
| 10-27 | 1,5 | ISO 12098 Anschluss 7 | **Bremslichter** |
| 10-28 | 1,5 | ISO 12098 Anschluss 2 | **Rechter Blinker** |
| 10-29 | 1,5 | ISO 12098 Anschluss 12 | **Liftachseinrichtung** |
| **10-30** | **1,5** | **-** | **Frei** |

Insbesondere entsprechen die elektrischen Anschlüsse 10-1 bis 10-7 den Anschlüssen einer Steckkupplung gemäß ISO 7638. Das EPI-Modul 4 ist als "männlicher" Stecker ausgebildet mit den hervortretenden Steckelementen 6. Nicht dargestellt sind in Fig. 1 die elektrischen und pneumatischen Eingangs- und Ausgangsleitungen des EPI-Moduls 4, über welche dieses mit weiteren elektrischen und pneumatischen Bauelementen des Zugfahrzeugs bzw. des Anhängers gekuppelt ist.

**Fig. 2** zeigt ein Gegen-EPI-Modul 11 eines Zugfahrzeugs in Form eines weiblichen Gegen-Steckers 12. Anstelle der Steckelemente 6 besitzt das Gegen-EPI-Modul 11 entsprechende Vertiefungen 13. Die Steckelemente 6 und Vertiefungen 13 treten für Ankuppeln des EPI-Moduls 4 gemäß Fig. 1 an das Gegen-EPI-Modul 11 gemäß Fig. 2 miteinander in Wechselwirkung, wobei im Bereich der Führungs- und Kupplungselemente 7 des EPI-Moduls 4 die Vertiefungen 13 des Gegen-EPI-Moduls 1 eine mechanische Abstützung, Führung und Kupplung gewährleisten. Der Vorratsdruckanschluss 8 und der Bremssteuerdruckanschluss 9 des EPI-Moduls 4 schaffen mit den zugeordneten Vertiefungen 13 des Gegen-EPI-Moduls 11 jeweils pneumatische Verbindungen mit einer Abdichtung. Die elektrischen Anschlüsse 10 des EPI-Moduls 4 führen mit den zugeordneten Vertiefungen 13 des Gegen-EPI-Moduls 11 elektrische Verbindungen, u. U. ebenfalls unter Abdichtung, herbei. Möglich ist, dass in gekuppeltem Zustand des EPI-Moduls 4 mit einem Gegen-EPI-Modul 11 weitere Bauelemente vorhanden sind oder Maßnahmen getroffen sind, um die Kupplung zu sichern, das EPI-Modul 4 und das Gegen-EPI-Modul 11 gegen Beschädigungen zu schützen, eine Isolation vorzunehmen, einen Eintritt von Verunreinigungen oder Feuchtigkeit zu vermeiden u. ä.

Die in Fig. 1 und 2 dargestellte Ausführungsform des EPI-Moduls 4 sowie des Gegen-EPI-Moduls 11 ist, insbesondere hinsichtlich der Zahl der Anschlüsse und der Anschlussgeometrien, lediglich beispielhaft. Im Rahmen der Erfindung können entsprechende oder abweichende Ausgestaltungen der Zahl und Geometrien der Anschlüsse des EPI-Moduls 4 und des Gegen-EPI-Moduls 11 Einsatz finden, so lange ein EPI-Modul sowohl eine elektrische/elektronische als auch pneumatische Kupplung ermöglicht.

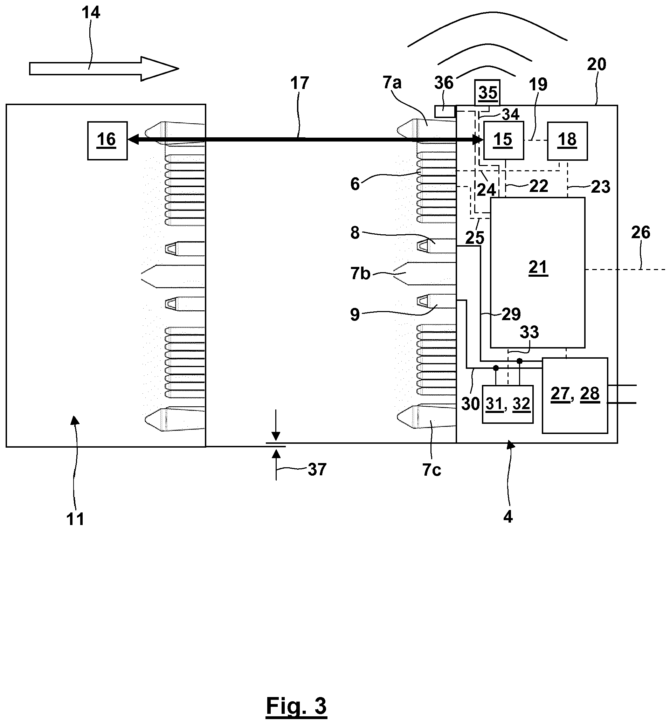

**Fig. 3** zeigt ein Gegen-EPI-Modul 11, welches im Bereich der während des Kupplungsvorgangs einem Anhänger zugewandten Stirnseite eines Zugfahrzeugs angeordnet ist und sich während des Kupplungsvorgangs mit dem Zugfahrzeug in die Fahrtrichtung 14 (Rückwärtsfahrt) in Richtung eines EPI-Moduls 4 bewegt, welches im Bereich der dem Zugfahrzeug und Gegen-EPI-Moduls 11 zugewandten Stirnseite des Anhängers angeordnet ist. Das EPI-Modul 4 und das Gegen-EPI-Modul 11 verfügen jeweils über integrierte Positionserfassungseinrichtungen 15, 16, welche miteinander kommunizieren, um einen relativen Abstand 17 der Positionserfassungseinrichtungen 15, 16 oder des EPI-Moduls 4 von dem Gegen-EPI-Modul 11 zu ermitteln. Beispielsweise sendet die Positionserfassungseinrichtung 15 ein Signal aus, welches von der Positionserfassungseinrichtung 16 erfasst wird, wobei eine Veränderung des empfangenen Signals in Abhängigkeit des Abstands 17 ausgewertet wird, um den Abstand 17 zu ermitteln. Ebenfalls möglich ist, dass die Positionserfassungseinrichtung 16 ein Signal aussendet, welches von der Positionserfassungseinrichtung 15 erfasst wird. Wie eingangs erläutert kann auch die Positionserfassungseinrichtung 16 entfallen, während die Positionserfassungseinrichtung 15 den Abstand des Gegen-EPI-Moduls 11 von dem EPI-Modul 4 erfasst, beispielsweise mit Erfassung eines Bildes durch eine CCD-Kamera, Ultraschall-Abstandsmessung u. ä.

Die Positionserfassungseinrichtung 15 wird von einer Speichereinrichtung 18, insbesondere einer Batterie oder einem Akkumulator, über eine Versorgungsleitung 19 mit elektrischer Leistung versorgt, auch wenn noch keine Kupplung des EPI-Moduls 4 mit dem Gegen-EPI-Modul 11 erfolgt ist, womit eine Leistungsversorgung über das Zugfahrzeug möglich wäre.

In ein Gehäuse 20 des EPI-Moduls 4 integriert ist eine Steuereinheit 21. Der Steuereinheit 21 wird über eine Leitung 22 das Signal der Positionserfassungseinrichtung 15 zugeführt. Andererseits kann die Steuereinheit 21 über die Leitung 22 den Betrieb der Positionserfassungseinrichtung 15 steuern. Unter Umständen steuert die Steuereinheit 21 auch über eine Leitung 23 den Wiederaufladezyklus der Speichereinrichtung 18, für welchen ein Ladestrom bereitgestellt wird über eine Leitung 24 von einem Steckelement 6, wobei der Ladestrom für erfolgte Kupplung des EPI-Moduls 4 mit dem Gegen-EPI-Modul 11 von dem Zugfahrzeug bereitgestellt werden kann. Das elektrische Signal mindestens eines weiteren Steckelements 6 wird der Steuereinheit 21 über eine weitere Leitung 25 zur Verfügung gestellt. Die Steuereinheit 21 erzeugt Steuersignale für eine Leitung 26 oder kommuniziert mit weiteren Baueinheiten oder Steuereinheiten über eine Leitung 26. Beispielsweise erfolgt über die Leitung 26 eine elektrische Ansteuerung von Magnetventilen oder Vorsteuerventilen einer hier nicht dargestellten pneumatischen Bremsanlage und/oder Luftfederanlage.

In das EPI-Modul 4 ist eine Ventileinrichtung 27 mit mindestens einem pneumatischen Ventil 28 integriert. Die Ventileinrichtung 27 ist über eine Vorratsleitung 29 mit dem Vorratsdruckanschluss 8 verbunden, während der Bremssteuerdruckanschluss 9 über eine Bremssteuerleitung 30 mit der Ventileinrichtung 27 verbunden ist. Der Druck in der Vorratsleitung 29 und der Bremssteuerleitung 30 wird jeweils über einen Drucksensor 31, 32 erfasst (in Fig. 3 zur Vereinfachung in einer Baueinheit dargestellt). Das Ausgangssignal der Drucksensoren 31, 32 wird der Steuereinheit 21 über eine Leitung 33 zugeführt. Die Steuereinheit 21 steuert über eine Leitung 34 eine Sendeeinrichtung 35 an, deren Signal von dem Gegen-EPI-Modul 11, dem Zugfahrzeug und insbesondere einer Empfangseinrichtung in der Fahrerkabine des Zugfahrzeugs oder einem FACS empfangen werden kann. Schließlich ist im Bereich der Schnittstelle 1 ein mechanischer Kontakt- oder Kopplungssensor 36 angeordnet, dessen Ausgangssignal der Steuereinheit 21 zugeführt wird.

Im Folgenden wird beispielhaft ein automatischer Kupplungsvorgang unter Verwendung eines EPI-Moduls 4 und eines Gegen-EPI-Moduls 11 gemäß Fig. 3 beschrieben, wobei durchaus Kupplungsvorgänge mit Betriebsweisen des EPI-Moduls 4 abweichend oder mit einem Entfall einzelner im Folgenden beschriebener Verfahrensschritte erfolgen können.

Der voll- oder teilautomatisierte Kupplungsvorgang beginnt damit, dass der Fahrer das Zugfahrzeug rückwärtig an den Anhänger annähert, womit auch eine Verringerung des Abstands 17 zwischen dem Gegen-EPI-Modul 11 des Zugfahrzeugs und des EPI-Moduls 4 des Anhängers erfolgt. Vor, mit oder nach Beginn dieses Annäherungsvorgangs aktiviert die Steuereinheit 21 die Positionserfassungseinrichtung 15, so dass der Abstand 17 erfasst wird und der Steuereinheit 21 zugeführt wird. Die Aktivierung kann beispielsweise automatisch über das FACS ausgelöst werden oder von einem Fahrer, indem ein funkbasiertes Aktivierungssignal an die Steuereinheit 21 übermittelt wird, welches diese "weckt". Der von der Positionserfassungseinrichtung 15 erfasste Abstand 17 wird in vorbestimmten Zeitabständen, kontinuierlich oder mit sukzessivem Unterschreiten unterschiedlicher Schwellwerte des Abstands, über die Steuereinheit 21 und die Sendeeinrichtung 35 an das Zugfahrzeug, insbesondere an das FACS gesendet. Auf Grundlage des derart übermittelten Abstands 17 kann dann das FACS arbeiten, beispielsweise automatisch die Fahrgeschwindigkeit mit zunehmender Annäherung verringern. Ergänzende Maßnahmen können für eine zusätzliche Erfassung eines seitlichen Abstands oder Versatzes 37 erfolgen. Diese können beispielsweise darin bestehen, dass dem Fahrer ein seitlicher Versatz 37 angezeigt oder anderweitig signalisiert wird. Schließlich erfolgt die ordnungsgemäße Kopplung des EPI-Moduls 4 mit dem Gegen-EPI-Modul 11. Mit dieser kommt der Kontakt- oder Kopplungssensor 36 zur Anlage an eine zugewandte Stirnseite des Gegen-EPI-Moduls 11, womit ein entsprechendes Kontaktsignal von dem Kontakt- oder Kopplungssensor 36 an die Steuereinheit 21 übertragen wird. Somit kann über den Kontakt- oder Kopplungssensor 36 alternativ oder redundant zu der Positionserfassungseinrichtung 15 erfasst und überwacht werden, ob eine Kupplung erfolgt ist. Mit erfolgter Kupplung sind auch der Vorratsdruckanschluss 8 und der Bremssteuerdruckanschluss 9 mit dem Zugfahrzeug verbunden, so dass unmittelbar Vorratsdruck in der Vorratsleitung 29 anliegt. Mittels des Drucksensors 32 kann somit zusätzlich erfasst werden, ob eine ordnungsgemäße Kupplung erfolgt ist und/oder ausreichender Vorratsdruck an dem Vorratsdruckanschluss 8 bereitsteht. Über den Drucksensor 31 kann erfasst werden, ob die ordnungsgemäße Kupplung erfolgt ist und eine Betätigung des Bremspedals durch den Fahrer erfolgt ist, so dass an dem Bremssteuerdruckanschluss 9 der Bremssteuerdruck anliegt. Auf Grundlage der Erkennung durch die Steuereinheit, dass die Kupplung erfolgt ist, kann eine Ansteuerung der Ventileinrichtung 27 erfolgen oder ein geeignetes Steuersignal in der Leitung 26 bereitgestellt werden. Durch ein in das EPI-Modul 4 integriertes Ventil 28 oder externe Ventile über die Ansteuerung über die Leitung 26 kann beispielsweise über die Steuereinheit 21 eine Niveauregelung aktiviert werden, ein Lösen einer Parkbremse erfolgen o. ä. Während des Kupplungsvorgangs und nach Erkennung der Kupplung kann ein Signal hinsichtlich des Abstands 17 und eine Verifikation, dass die Kupplung erfolgt ist, über die Steuereinheit 21 und die Sendeeinrichtung 35 an das Zugfahrzeug übertragen werden. Auch während des Fahrbetriebs kann vorteilhaft das EPI-Modul 4 genutzt werden, um beispielsweise über die Ventileinrichtung 27 und die Steuereinrichtung einzelne Funktionen zu übernehmen. Kommt es bspw. zu einer Störung, insbesondere einem Leitungsabriss, einem ungewollten Lösen des EPI-Moduls 4 von dem Gegen-EPI-Modul 11, einer Verstopfung des Vorratsdruckanschlusses 8 oder einer Leckage, kann dies über die Drucksensoren 31, 32, den Kontakt- oder Kopplungssensor 36 und/oder die Positionserfassungseinrichtung 15 erkannt werden, womit dann durch die Steuereinheit 21 geeignete Maßnahmen ergriffen werden können, insbesondere eine Warnung über die Sendeeinrichtung 35 an den Fahrer übertragen und/oder eine Notbremsung über die Betriebsbremse oder die Federspeicherbremse ausgelöst werden kann.

Im Rahmen der Erfindung können einzelne Funktionen und Bauelemente gemäß Fig. 3 in dem EPI-Modul 4 weggelassen sein. So kann beispielsweise ein Entfall der Drucksensoren 31, 32 sowie der Ventileinrichtung 27 mit dem mindestens einem Ventil 28 erfolgen. Andererseits ist auch möglich, dass die Ventileinrichtung 28 wesentliche Bestandteile der Bremsanlage oder einer Luftfederungseinrichtung beinhaltet, beispielsweise ein Parkventil, Löseventil und/oder Anhängerbremsventil.

### BEZUGSZEICHENLISTE

- 1: Schnittstelle
- 2: Kupplungseinheit
- 3: Baueinheit
- 4: EPI-Modul
- 5: Stecker
- 6: Steckelemente
- 7: Führungs- und Kupplungselement
- 8: Vorratsdruckanschluss
- 9: Bremssteuerdruckanschluss
- 10: elektrischer Anschluss oder Pol
- 11: Gegen-EPI-Modul
- 12: Gegen-Stecker
- 13: Vertiefungen
- 14: Fahrtrichtung
- 15: Positionserfassungseinrichtung
- 16: Positionserfassungseinrichtung
- 17: Abstand
- 18: Speichereinrichtung
- 19: Versorgungsleitung
- 20: Gehäuse
- 21: Steuereinheit
- 22: Leitung
- 23: Leitung
- 24: Leitung
- 25: Leitung
- 26: Leitung
- 27: Ventileinrichtung
- 28: Ventil
- 29: Vorratsleitung
- 30: Bremssteuerleitung
- 31: Drucksensor
- 32: Drucksensor
- 33: Leitung
- 34: Leitung
- 35: Sendeeinrichtung
- 36: Kontakt- oder Kopplungssensor
- 37: seitlicher Versatz

## Patentansprüche

1. EPI-Modul (4;11), welches als Kopplungs-Schnittstelle zwischen einem Zug- oder Nutzfahrzeug und einem Anhänger oder zwischen zwei Anhängern ausgebildet ist, die eine elektrische sowie eine pneumatische Kopplung ermöglicht, und welches als Stecker ausgebildet ist, so dass dieses eine Steckverbindung ermöglicht, mit einer integrierten Positionserfassungseinrichtung (15;16), **dadurch gekennzeichnet, dass** mittels der integrierten Positionserfassungseinrichtung während einer Rückwärtsfahrt eines Zugfahrzeugs eine relative Position zwischen dem Zugfahrzeug und einem Anhänger ermittelbar ist.

2. EPI-Modul (4;11) nach Anspruch 1, **dadurch gekennzeichnet, dass** eine Speichereinrichtung (18) für eine elektrische Leistungsversorgung der integrierten Positionserfassungseinrichtung (15;16) in das EPI-Modul (4; 11) integriert ist.

3. EPI-Modul (4;11) nach Anspruch 2, **dadurch gekennzeichnet, dass** die Speichereinrichtung (18) über einen elektrischen Anschluss (6) des EPI-Moduls (4;11) aufladbar ist.

4. EPI-Modul (4;11) nach Anspruch 2, **dadurch gekennzeichnet, dass** die Speichereinrichtung (18) über eine Solareinrichtung aufladbar ist.

5. EPI-Modul (4; 11) nach einem der Ansprüche 1 bis 4, **dadurch gekennzeichnet, dass** eine drahtlose Sendeeinrichtung (35) vorhanden ist, mittels welcher drahtlos ein Positionssignal gesendet werden kann.

6. EPI-Modul (4;11) nach einem der vorhergehenden Ansprüche, **dadurch gekennzeichnet, dass** in das EPI-Modul (4;11) eine Steuereinheit (21) integriert ist.

7. EPI-Modul (4;11) nach Anspruch 6, **dadurch gekennzeichnet, dass** die Steuereinheit (21) stoßgedämpft und/oder stoßgefedert in einem Gehäuse (20) des EPI-Moduls (4;11) befestigt ist.

8. EPI-Modul (4;11) nach Anspruch 6 oder 7, **dadurch gekennzeichnet, dass** die Steuereinheit (21) mit Steuerlogik ausgestattet ist, welche ein Steuersignal für eine Steuerung von Magnetventilen einer elektropneumatisch gesteuerten Bremsanlage und/oder einer elektropneumatisch gesteuerten Luftfederanlage erzeugt.

9. EPI-Modul (4; 11) nach einem der Ansprüche 6 bis 8, **dadurch gekennzeichnet, dass** die Steuereinheit (21) mit Steuerlogik ausgestattet ist, welche in Abhängigkeit von der Positionserfassungseinrichtung (15;16) die Bremsanlage aktiviert oder deaktiviert.

10. EPI-Modul (4;11) nach einem der vorhergehenden Ansprüche, **dadurch gekennzeichnet, dass** in dem EPI-Modul (4;11) ein pneumatisches Ventil (28) vorhanden ist.

11. EPI-Modul (4;11) nach einem der Ansprüche 6 bis 10, **dadurch gekennzeichnet, dass** die Steuereinheit (21) mit Steuerlogik ausgestattet ist, welche das Signal eines Drucksensors einer Luftfederungsanlage oder Bremsanlage verarbeitet.

12. EPI-Modul (4;11) nach einem der Ansprüche 6 bis 11, **dadurch gekennzeichnet, dass** die Steuereinheit (21) mit Steuerlogik ausgestattet ist, welche das Signal eines Drucksensors (31; 32) verarbeitet, welcher einen über das EPI-Modul (4;11) übertragenen Bremssteuerdruck oder Vorratsdruck erfasst.

13. EPI-Modul (4;11) nach einem der Ansprüche 6 bis 12, **dadurch gekennzeichnet, dass** die Steuereinheit (21) mit Steuerlogik ausgestattet ist, welche das Signal eines mechanischen Kontakt- oder Kopplungssensors (36) verarbeitet.

14. EPI-Modul (4;11) nach einem der Ansprüche 6 bis 13, **dadurch gekennzeichnet, dass** die Steuereinheit (21) mit Steuerlogik ausgestattet ist, welche mit einem automatischen Kupplungssystem und/oder einem automatischen Entkupplungssystem (FACS) zusammenwirkt.

15. EPI-Modul (4;11) nach einem der Ansprüche 6 bis 14, **dadurch gekennzeichnet, dass** die Steuereinheit (21) mit Steuerlogik ausgestattet ist, welche ein Signal zur Abbremsung des Zugfahrzeugs ermittelt.

16. EPI-Modul (4;11) nach einem der vorhergehenden Ansprüche, **dadurch gekennzeichnet, dass**
a) das EPI-Modul über eine Identifikationseinrichtung verfügt, welche ein Identifikationssignal sendet und/oder empfängt und/oder
b) die Steuereinheit (21) mit Steuerlogik ausgestattet ist, welche ein von einer Identifikationseinrichtung empfangenes Identifikationssignal auswertet.

## Claims

1. EPI-module (4;11) which forms a coupling interface between a tractor or commercial vehicle and a trailer or between two trailers which provides the option of an electrical as well as a pneumatical coupling, the EPI-module (4;11) having the design of a plug for providing the option of a plugged connection and the EPI-module (4;11) comprising an integrated position sensing device (15;16), **characterised in that** by means of the integrated position sensing device it is possible to determine a relative position between the tractor and a trailer during reversing of the tractor.

2. EPI-module (4;11) of claim 1, **characterised in that** a storing device (18) for an electrical power supply of the integrated position sensing device (15;16) is integrated into the EPI-module (4;11).

3. EPI-module (4; 11) of claim 2, **characterised in that** the storing device (18) can be loaded via an electrical port (6) of the EPI-module (4;11).

4. EPI-module (4; 11) of claim 2, **characterised in that** the storing device (18) can be loaded via a solar device.

5. EPI-module (4;11) of one of claims 1 to 4, **characterised in that** a wireless sending device (35) is present by which it is possible to wirelessly send a position signal.

6. EPI-module (4;11) of one of the preceding claims, **characterised in that** a control unit (21) is integrated into the EPI-module (4;11).

7. EPI-module (4;11) of claim 6, **characterised in that** the control unit (21) is mounted in a housing (20) of the EPI-module (4;11) in a way damped and/or sprung against shocks.

8. EPI-module (4;11) of claim 6 or 7, **characterised in that** the control unit (21) comprises control logic which generates a control signal for a control of solenoid valves of an electro-pneumatically controlled brake system and/or an electro-pneumatically controlled air suspension system.

9. EPI-module (4;11) of one of claims 6 to 8, **characterised in that** the control unit (21) comprises control logic which activates or deactivates the brake system dependent on the position sensing device (15;16).

10. EPI-module (4;11) of one of the preceding claims, **characterised in that** a pneumatical valve (28) is provided in the EPI-module (4;11).

11. EPI-module (4;11) of one of claims 6 to 10, **characterised in that** the control unit (21) comprises control logic which processes the signal of a pressure sensor of an air suspension system or a brake system.

12. EPI-module (4;11) of one of claims 6 to 11 **characterised in that** the control unit (21) comprises control logic which processes the signal of a pressure sensor (31; 32) which senses a brake control pressure or a supply pressure transmitted by the EPI-module (4;11).

13. EPI-module (4;11) of one of claims 6 to 12, **characterise6d in** that the control unit (21) comprises control logic which processes the signal of a mechanical contact sensor or coupling sensor (36).

14. EPI-module (4;11) of one of claims 6 to 13, **characterised in that** the control unit (21) comprises control logic which cooperates with an automatic coupling system and/or an automatic decoupling system (FACS).

15. EPI-module (4;11) of one of claims 6 to 14, **characterised in that** the control unit (21) comprises control logic which determines a signal for braking the tractor.

16. EPI-module (4;11) of one of the preceding claims, **characterised in that**
a) the EPI-module comprises an identification device which sends and/or receives an identification signal and/or
b) the control unit (21) comprises control logic which analyses an identification signal received by an identification device.

## Revendications

1. Module EPI (4;11) qui est conçu comme une interface de couplage entre un véhicule tracteur ou un véhicule utilitaire et une remorque ou entre deux remorques, qui permet un couplage électrique ainsi qu'un couplage pneumatique, et qui est conçu comme un connecteur, de façon à ce que celui-ci permette une liaison par connecteur, avec un dispositif de mesure de position intégré (15;16), **caractérisé en ce que**, au moyen du dispositif de mesure de position intégré, pendant un déplacement en marche arrière d'un véhicule tracteur, une position relative entre le véhicule tracteur et une remorque puisse être déterminée.

2. Module EPI (4;11) selon la revendication 1, **caractérisé en ce qu'**un dispositif de mémoire (18) pour une alimentation en puissance électrique du dispositif de mesure de position intégré (15;16) est intégré dans le module EPI (4;11).

3. Module EPI (4;11) selon la revendication 2, **caractérisé en ce que** le dispositif de mémoire (18) peut être rechargé par l'intermédiaire d'un raccordement électrique (6) du module EPI (4;11).

4. Module EPI (4;11) selon la revendication 2, **caractérisé en ce que** le dispositif de mémoire (18) peut être rechargé par l'intermédiaire d'un dispositif photovoltaïque.

5. Module EPI (4;11) selon l'une des revendications 1 à 4, **caractérisé en ce qu'**un dispositif d'émission sans fil (35) est prévu, au moyen duquel un signal de position peut être envoyé sans fil.

6. Module EPI (4;11) selon l'une des revendications précédentes, **caractérisé en ce qu'**une unité de commande (21) est intégrée dans le module EPI (4;11).

7. Module EPI (4;11) selon la revendication 6, **caractérisé en ce que** l'unité de commande (21) est fixée de manière amortie et/ou à l'aide de ressorts dans un boîtier (20) du module EPI (4;11).

8. Module EPI (4;11) selon la revendication 6 ou 7, **caractérisé en ce que** l'unité de commande (21) est équipée d'une logique de commande qui génère un signal de commande pour la commande d'électrovannes d'une installation de freinage commandée de manière électropneumatique et/ou d'une installation à ressorts pneumatiques commandée de manière électropneumatique.

9. Module EPI (4;11) selon l'une des revendications 6 à 8, **caractérisé en ce que** l'unité de commande (21) est équipée d'une logique de commande qui active ou désactive l'installation de freinage en fonction du dispositif de mesure de position (15;16).

10. Module EPI (4;11) selon l'une des revendications précédentes, **caractérisé en ce que**, dans le module EPI (4;11), est prévue une vanne pneumatique (28).

11. Module EPI (4;11) selon l'une des revendications 6 à 10, **caractérisé en ce que** l'unité de commande (21) est équipée d'une logique de commande qui traite le signal d'un capteur de pression d'une installation à ressorts pneumatiques ou d'une installation de freinage.

12. Module EPI (4;11) selon l'une des revendications 6 à 11, **caractérisé en ce que** l'unité de commande (21) est équipée d'une logique de commande qui traite le signal d'un capteur de pression (31, 32) qui mesure une pression de commande de freinage ou une pression de réservoir transmise par l'intermédiaire du module EPI (4;11).

13. Module EPI (4;11) selon l'une des revendications 6 à 12, **caractérisé en ce que** l'unité de commande (21) est équipée d'une logique de commande qui traite le signal d'un capteur à contact ou à couplage mécanique (36).

14. Module EPI (4; 1) selon l'une des revendications 6 à 13, **caractérisé en ce que** l'unité de commande (21) est équipée d'une logique de commande qui interagit avec un système de couplage automatique et/ou un système de découplage automatique (FACS).

15. Module EPI (4;11) selon l'une des revendications 6 à 14, **caractérisé en ce que** l'unité de commande (21) est équipée d'une logique de commande qui détermine un signal pour le freinage du véhicule tracteur.

16. Module EPI (4;11) selon l'une des revendications précédentes, **caractérisé en ce que**
a) le module EPI dispose d'un dispositif d'identification qui envoie et/ou reçoit un signal d'identification et/ou
b) l'unité de commande (21) est équipée d'une logique de commande, qui analyse un signal d'identification reçu par un dispositif d'identification.
